# EUROPÄISCHE PATENTSCHRIFT

(11) **EP 3 829 394 B1**
(45) Veröffentlichungstag und Bekanntmachung des Hinweises auf die Patenterteilung: **24.05.2023**
(21) Anmeldenummer: 19727659.5
(22) Anmeldetag: 29.05.2019
(51) Int. Cl.: E03C 1/18, E03C 1/186, E03C 1/33, A47B 77/02, A47B 77/06, A47L 19/02, A47J 47/20

(54) **KÜCHENMÖBEL MIT ARBEITSPLATTE, DIE WASSERBECKEN UND EINSATZ UMFASST**
KITCHEN FURNITURE WITH WORKTOP COMPRISING SINK AND FITTING
MEUBLE DE CUISINE AVEC PLAN DE TRAVAIL COMPRENANT ÉVIER ET GARNITURE

(30) Priorität: 20.08.2018 DE 102018120232
(43) Veröffentlichungstag der Anmeldung: 09.06.2021
(73) Patentinhaber: Bulthaup GmbH & Co. KG, 84155 Bodenkirchen (DE)
(72) Erfinder: ECKERT, Marc Oliver, 84155 Bodenkirchen (DE)
(74) Vertreter: Herrmann, Uwe
(86) Internationale Anmeldenummer: PCT/EP2019/063950
(87) Internationale Veröffentlichungsnummer: WO 2020/038619

(56) Entgegenhaltungen:
- EP-A1- 2 868 818
- FR-A1- 2 652 367
- US-A1- 2005 067 747
- US-B2- 9 783 967

## Beschreibung

Die Erfindung betrifft Küchenmöbel gemäß dem Oberbegriff des Anspruchs 1. Derartige Küchenmöbel sind aus US2005/067747A1, EP2868818A1, US9783967B2 und FR2652367A1 bekannt.

Aus dem Stand der Technik ist es bekannt, an Arbeitsplatten von Küchenmöbeln wenigstens ein Wasserbecken einzulassen. Typischerweise ist das Wasserbecken wannenförmig und umfasst einen verschließbaren Wasserablauf an dessen Boden. Der Wassereinlass für das Becken ist typischerweise als separater Wasserhahn oberhalb des Wasserbeckens angeordnet.

Wenn eine flache Arbeitsunterlage wie insbesondere ein Schneidebrett mit Wasser gespült werden soll, ist es erforderlich, das Schneidebrett von der Arbeitsfläche anzuheben, schräg in das Becken zu halten, unter dem eingeschalteten Wasserhahn zu bewegen und im Anschluss wieder aus dem Becken zu entfernen auf die Arbeitsfläche zu legen. Dieser Vorgang führt vielfach dazu, dass Wasser auf die

Arbeitsfläche gelangt, und ist generell umständlich.

Aufgabe der Erfindung ist es, ein Konzept bereitzustellen, mit dem die Spülung einer flachen Arbeitsunterlage vereinfacht wird.

Vor diesem Hintergrund betrifft die Erfindung ein Küchenmöbel gemäß Anspruch 1 mit einer Arbeitsplatte, in der ein Wasserbecken eingelassen ist, wobei wenigstens eine Seitenwand des Wasserbeckens als schräge Rampe ausgebildet ist, wobei ein auf der Rampe stehender Einsatz vorgesehen ist, der eine flache Arbeitsoberfläche und einen Unterbau umfasst, und wobei der Unterbau so ausgebildet ist, dass er die Schräge der Rampe ausgleicht, um die Arbeitsoberfläche waagrecht zu halten.

Die flache Arbeitsoberfläche des Einsatzes dient in identischer Weise wie ein herkömmliches Schneidebrett als Unterlage für typische Küchenarbeiten, beispielsweise Schneiden oder Kneten. Durch die Anordnung der Arbeitsoberfläche auf einem Einsatz, der bereits innerhalb des Wasserbeckens angeordnet ist, entfällt bei einem Spülen der Arbeitsoberfläche die Notwendigkeit, diese in das Becken und sodann wieder aus dem Becken zu transferieren.

Erfindungsgemäß ist im oberen Bereich der Rampe ein Wassereinlass angeordnet. In diesem Fall kann Wasser direkt von der Oberseite der Rampe über die Arbeitsfläche laufen, ohne einen Wasserhahn über dem Becken betätigen und bewegen zu müssen. Der Wassereinlass kann länglich sein und Wasser über einen ausgedehnten Bereich der Breite der Rampe abgeben. So wird bei Aktivierung des Wassereinlasses eine vollflächige Spülung der Arbeitsoberfläche erreicht.

In einer Ausführungsform ist vorgesehen, dass der Unterbau des Einsatzes wenigstens zwei in Steigungsrichtung der Rampe verlaufende Stege umfasst, deren Unterkanten komplementär zum Anstieg der Rampe abgeschrägt sind. Die Stege können an gegenüberliegenden Endbereichen an der Unterseite der Arbeitsoberfläche angeordnet sein, um einen stabilen Stand des Einsatzes auf der Rampe zu gewährleisten.

Der Einsatz kann eine Platte umfassen, an deren Oberseite die Arbeitsoberfläche ausgebildet ist und an deren Unterseite die Stege befestigt sind.

An den Unterkanten beider Stege kann wenigstens ein Haftelement befestigt sein, um die Reibung zwischen den Unterkanten und der Rampe zu erhöhen. Beispielsweise können Gummiplättchen an den gegenüberliegenden Endbereichen beider Rampen angeordnet werden.

Der Neigungswinkel der Rampe kann zwischen 15° und 45°, vorzugsweise zwischen 25° und 35° betragen. Die Wahl des Neigungswinkels in diesem Bereich ist vorteilhaft. Ein zu flacher Neigungswinkel einerseits zu einem schlechten Ablauf von Abfällen und andererseits zu einem sehr großen Flächenbedarf der Rampe bei geringer Tiefe des Wasserbeckens führen würde. Ein zu großer Neigungswinkel würde einerseits die Haftung des Unterbaus auf der Rampe verschlechtern und andererseits die horizontale Fläche der Rampe bei sinnvollen Beckentiefen zu stark verkleinern, was automatisch zu einer Begrenzung der verfügbaren Fläche für die Arbeitsoberfläche führen würde.

Vorzugsweise ist der Neigungswinkel der Rampe über deren gesamten Verlauf homogen. So bleibt die Arbeitsfläche horizontal, während der Einsatz an der Rampe verschoben wird.

Vorzugsweise ist die Rampe über deren gesamten Verlauf perfekt eben.

In einer Ausführungsform ist vorgesehen, dass unterhalb der Rampe ein Wasserablauf angeordnet ist. So können das über die Rampe und die Arbeitsoberfläche laufende Wasser und die etwaigen mitgespülten Abfälle direkt in den Wasserablauf laufen. Der Wasserablauf kann länglich sein und Wasser über einen ausgedehnten Bereich der Breite der Rampe aufnehmen. So wird der beschriebene direkte Ablauf über einen ausgedehnten Bereich der Breite des Beckens gewährleistet.

In einer Ausführungsform ist vorgesehen, dass die Länge der Arbeitsoberfläche geringer ist als die waagrechte Länge der Rampe. Durch diese Konstellation wird erreicht, dass der Einsatz über einen gewissen Bereich entlang der Rampe verschoben werden kann, um so dessen Tiefe innerhalb des Wasserbeckens einstellen zu können. Während des Arbeitens kann eine geringe Eintauchtiefe vorteilhaft sein, um einen guten Zugang zur Arbeitsfläche zu haben, während beim Spülen eine größere Eintauchtiefe gewünscht sein kann, um ein Auslaufen von Wasser zu verhindern.

Das Wasserbecken kann neben der Rampe auch noch einen flachen Beckenboden aufweisen. Alternativ kann vorgesehen sein, dass die Rampe gleichzeitig eine Seitenwand und den gesamten Beckenboden darstellt.

Weitere Einzelheiten und Vorteile der Erfindung ergeben sich aus dem nachfolgend anhand der Figuren diskutierten Ausführungsbeispiel. In den Figuren zeigen:
- Figur 1:: eine Küchenzeile umfassend eine Arbeitsplatte mit zwei erfindungsgemäß ausgebildeten Wasserbecken nebst Einsatz;
- Figur 2:: Detailansichten eines Einsatzes;
- Figur 3:: eine isolierte Darstellung der Arbeitsplatte, wobei eine mögliche Verschiebung der Einsätze entlang der Rampe dargestellt ist; und
- Figur 4:: eine weitere isolierte Darstellung der Arbeitsplatte, wobei ein Einsatz entnommen wurde und die Spülung des Einsatzes und der Rampe dargestellt ist.

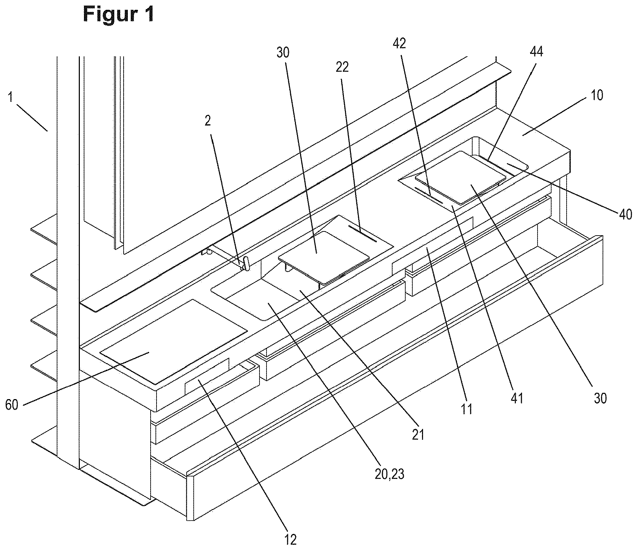

In Figur 1 ist eine Küchenzeile 1 dargestellt, die neben weiteren Elementen unter anderem eine erfindungsgemäß ausgebildete, waagrechte Arbeitsplatte 10 umfasst.

In die Arbeitsplatte 10 sind ein erstes Wasserbecken 20 und ein zweites Wasserbecken 40 eingelassen. Daneben umfasst die Arbeitsplatte auch ein Kochfeld 60 sowie Bedienelemente 11 und 12 für die Wasserbecken 20 und 30 bzw. das Kochfeld 60.

Eine Seitenwand des ersten Wasserbeckens 20, die in Tiefenrichtung der Arbeitsplatte 10 verläuft, ist als Rampe 21 mit einer Steigung von etwa 30° ausgebildet. Am oberen Ende der Rampe 21 ist ein schlitzförmiger Wassereinlass 22 angeordnet, um Wasser möglichst vollflächig über die Rampe 21 nach unten laufen lassen zu können. Der Neigungswinkel der Rampe 21 ist über deren gesamten Verlauf homogen und die Rampe 21 ist zudem über ihren gesamten Verlauf perfekt eben.

Das Wasserbecken 20 umfasst daneben einen waagrechten Boden 23, an dem ein in der Figur nicht näher dargestellter Ablauf angeordnet ist. Im Bereich oberhalb des Bodens umfasst die Küchenzeile einen klassischen Wasserhahn 2, sodass das Becken 20 auch im Sinne eines Wasserbeckens aus dem Stand der Technik genützt werden kann.

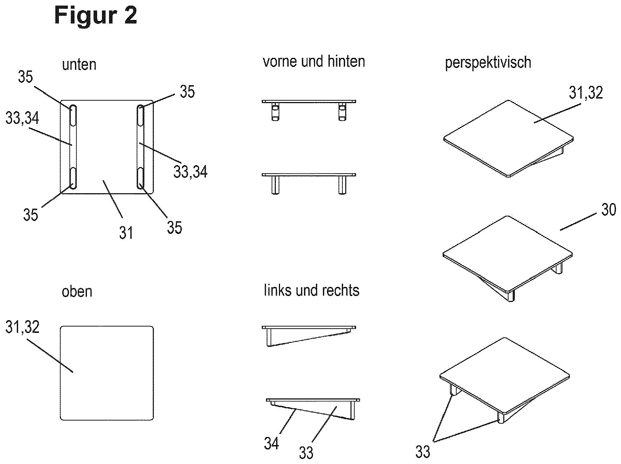

Auf der Rampe 21 ist ein abnehmbarer Einsatz 30 angeordnet, der in Figur 2 in unterschiedlichen Ansichten in Alleinstellung dargestellt ist. Der Einsatz 30 besteht im Wesentlichen aus einer Platte 31, an deren Oberseite eine ebene Arbeitsoberfläche 32 ausgebildet ist und an deren Unterseite zwei in Steigungsrichtung der Rampe 21, also in Längsrichtung der Arbeitsplatte 10 erstreckende Stege 33 befestigt sind. Die Unterkanten 34 der Stege 33 sind komplementär zum Anstieg der Rampe in einem Winkel von etwa 30° abgeschrägt. An den Unterkanten 34 beider Stege 33 sind zudem jeweils zwei Gummiplättchen 35 befestigt, um die Reibung zwischen den Unterkanten 34 der Stege 33 und der Rampe 21 zu erhöhen.

Durch die abgeschrägten Stege 33 wird dann, wenn der Einsatz 30 auf der Rampe 21 steht, die Schräge der Rampe 21 ausgeglichen und die Arbeitsoberfläche 32 steht waagrecht.

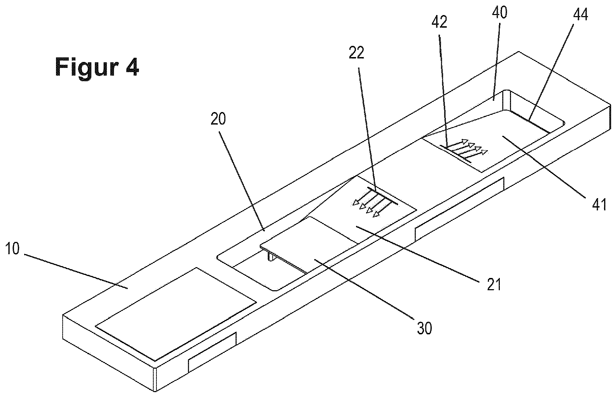

Wie dies in Figur 4 erkennbar ist, muss der Einsatz 30 zum Spülen der Arbeitsoberfläche 32 nicht bewegt werden, sondern Abfälle können durch Aktivieren des Wassereinlasses 22 direkt zum Abfluss gespült werden, indem Wasser vom Wassereinlass 22 an der Oberseite der Rampe 21 über die Arbeitsoberfläche 32 läuft, ohne den Wasserhahn 2 über dem Becken 20 betätigen zu müssen. Der Wasserverlauf ist in Figur 4 mit Pfeilen angedeutet.

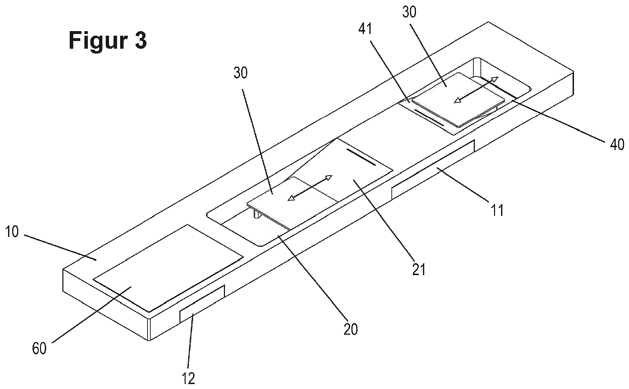

Die Länge der Platte 31 und mithin Arbeitsoberfläche 32 in Steigungsrichtung der Rampe 21, also in Längsrichtung der Arbeitsplatte 10 ist geringer als die waagrechte Länge der Rampe 21. Dadurch kann der Einsatz 30 über einen gewissen Bereich entlang der Rampe 21 verschoben werden, wie dies in Figur 3 durch die Pfeile angedeutet ist. So kann die Versenkungstiefe des Einsatzes 30 im Becken 20 durch Verschiebung entlang der Rampe 21 in einem gewissen Bereich eingestellt werden.

Während des Arbeitens kann eine geringe Versenkungstiefe vorteilhaft sein, um einen guten Zugang zur Arbeitsfläche 32 zu haben. Beim in Figur 4 erkennbaren Spülen kann eine größere Eintauchtiefe vorteilhaft sein, um ein Auslaufen von Wasser zu verhindern.

Die Arbeitsoberfläche 32 des Einsatzes 30 dient in identischer Weise wie ein herkömmliches Schneidebrett als Unterlage für typische Küchenarbeiten, beispielsweise Schneiden oder Kneten. Durch deren Anordnung auf dem Einsatz 30, der bereits innerhalb des Wasserbeckens 20 angeordnet ist, entfällt bei einem Spülen der Arbeitsoberfläche 32 die Notwendigkeit, diese in das Becken 20 und sodann wieder aus dem Becken 20 zu transferieren, wie in Figur 4 gezeigt.

Das weitere Becken 40 umfasst ebenfalls eine in Tiefenrichtung der Arbeitsplatte 10 verlaufende Seitenwand, die als Rampe 41 mit einer Steigung von etwa 30° ausgebildet ist. Auch hier ist am oberen Ende der Rampe 41 ein schlitzförmiger Wassereinlass 42 angeordnet, und die obige Beschreibung der Rampe 21 gilt entsprechend auch für die Rampe 41. Auf der Rampe 41 ist ebenfalls ein abnehmbarer Einsatz 30 angeordnet, der wie oben beschrieben ausgebildet ist. Die Funktionalität ist ebenfalls grundsätzlich identisch wie in Becken 20, wie auch aus Figuren 3 und 4 entnommen werden kann.

Der Unterschied des Beckens 40 gegenüber dem Becken 20 besteht darin, dass das Becken 40 keinen Beckenboden aufweist und die Rampe 41 gleichzeitig eine Seitenwand und den gesamten Beckenboden darstellt. Am unteren Ende der Rampe 41 ist ein schlitzförmiger Ablauf 44 angeordnet, um Abwasser und etwaige mitgespülte Abfälle am unteren Ende der Rampe 41 abzuleiten.

Oberhalb des weiteren Beckens 40 befindet sich kein klassischer Wasserhahn.

Es versteht sich, dass Abwandlungen der gezeigten Ausführungsform möglich sind, beispielsweise dahingehend, dass das Becken 20 als klassisches Wasserbecken ausgebildet ist oder dass das Becken 40 komplett fehlt. Auch die Grundsätzliche Konfiguration der Arbeitsplatte 10 mit Bezug auf Vorhandensein oder Fehlen sowie Positionierung eines Kochfeldes 60, Vorhandensein oder Fehlen sowie Positionierung der Bedienelemente 11 und 12, Positionierung der Becken 20 und 40 und dergleichen ist im Rahmen der vorliegenden Erfindung frei variabel.

Anhand der erfindungsgemäßen Becken 20 bzw. 40 und der Einsätze 30 wird die Spülung der flachen Arbeitsoberfläche 32 gegenüber Lösungen aus dem Stand der Technik maßgeblich vereinfacht.

## Patentansprüche

1. Küchenmöbel mit einer Arbeitsplatte (10), in der ein Wasserbecken (20,40) eingelassen ist,
wobei wenigstens eine Seitenwand des Wasserbeckens als schräge Rampe (21,41) ausgebildet ist, und wobei ein auf der Rampe stehender Einsatz (30) vorgesehen ist, der eine flache Arbeitsoberfläche (32) und einen Unterbau (33) umfasst, wobei der Unterbau so ausgebildet ist, dass er die Schräge der Rampe ausgleicht, um die Arbeitsoberfläche waagrecht zu halten, **dadurch gekennzeichnet, dass** im oberen Bereich der Rampe ein Wassereinlass angeordnet ist.

2. Küchenmöbel nach Anspruch 1, **dadurch gekennzeichnet, dass** der Wassereinlass (22,42) länglich ist und Wasser über einen ausgedehnten Bereich der Breite der Rampe abgibt.

3. Küchenmöbel nach einem der vorhergehenden Ansprüche, **dadurch gekennzeichnet, dass** der Unterbau des Einsatzes wenigstens zwei in Steigungsrichtung der Rampe verlaufende Stege umfasst, deren Unterkanten (34) komplementär zum Anstieg der Rampe abgeschrägt sind

4. Küchenmöbel nach Anspruch 3, **dadurch gekennzeichnet, dass** an den Unterkanten beider Stege wenigstens ein Haftelement (35) befestigt ist, um die Reibung zwischen den Unterkanten und der Rampe zu erhöhen.

5. Küchenmöbel nach einem der vorhergehenden Ansprüche, **dadurch gekennzeichnet, dass** die Rampe einen Neigungswinkel von zwischen 15° und 45°, vorzugsweise zwischen 25° und 35° aufweist.

6. Küchenmöbel nach einem der vorhergehenden Ansprüche, **dadurch gekennzeichnet, dass** der Neigungswinkel der Rampe über deren gesamten Verlauf homogen ist.

7. Küchenmöbel nach einem der vorhergehenden Ansprüche, **dadurch gekennzeichnet, dass** unterhalb der Rampe ein Wasserablauf (44) angeordnet ist.

8. Küchenmöbel nach Anspruch 7, **dadurch gekennzeichnet, dass** der Wasserablauf länglich ist und Wasser über einen ausgedehnten Bereich der Breite der Rampe aufnimmt.

9. Küchenmöbel nach einem der vorhergehenden Ansprüche, **dadurch gekennzeichnet, dass** die Länge der Arbeitsoberfläche geringer ist als die waagrechte Länge der Rampe.

## Claims

1. A piece of kitchen furniture having a worktop (10) in which a sink (20, 40) has been recessed,
wherein
at least one side wall of the sink is formed as a slanted ramp (21, 41): and wherein an insert (30) is provided that stands on the ramp and that comprises a flat work surface (32) and a subframe (33), with the subframe being configured such that it compensates the slant of the ramp to keep the work surface horizontal, **characterized in that** a water inlet is arranged in the upper region of the ramp.

2. A piece of kitchen furniture in accordance with claim 1, **characterized in that** the water inlet (22, 42) is elongate and discharges water over an extended region of the width of the ramp.

3. A piece of kitchen furniture in accordance with one of the preceding claims, **characterized in that** the subframe of the insert comprises at least two webs that extend in the upward slant direction of the ramp and whose lower edges (34) are chamfered in a complementary manner to the upward incline of the ramp.

4. A piece of kitchen furniture in accordance with claim 3, **characterized in that** at least one adhesive element (35) is fastened to the lower edges of both webs to increase the friction between the lower edges and the ramp.

5. A piece of kitchen furniture in accordance with one of the preceding claims, **characterized in that** the ramp has an inclination angle between 15° and 45°, preferably between 25° and 35°.

6. A piece of kitchen furniture in accordance with one of the preceding claims, **characterized in that** the inclination angle of the ramp is homogeneous over its total extent.

7. A piece of kitchen furniture in accordance with one of the preceding claims, **characterized in that** a water drain (44) is arranged below the ramp.

8. A piece of kitchen furniture in accordance with claim 7, **characterized in that** the water drain is elongate and receives water over an extended region of the width of the ramp.

9. A piece of kitchen furniture in accordance with one of the preceding claims, **characterized in that** the length of the work surface is smaller than the horizontal length of the ramp.

## Revendications

1. Meuble de cuisine avec un plan de travail (10), dans lequel est encastré un évier (20, 40),
au moins une paroi latérale de l'évier étant réalisée sous la forme d'une rampe inclinée (21, 41), et une garniture (30) placée sur la rampe étant prévue, qui comprend une surface de travail (32) plate et une structure sous-jacente (33), la structure sous-jacente étant conçue de manière à compenser l'inclinaison de la rampe pour maintenir la surface de travail horizontale, **caractérisé en ce qu'**une arrivée d'eau est disposée dans la zone supérieure de la rampe.

2. Meuble de cuisine selon la revendication 1, **caractérisé en ce que** l'arrivée d'eau (22, 42) est allongée et fournit de l'eau sur une zone étendue de la largeur de la rampe.

3. Meuble de cuisine selon l'une des revendications précédentes, **caractérisé en ce que** la structure sous-jacente de la garniture comprend au moins deux entretoises s'étendant dans la direction d'inclinaison de la rampe, dont les bords inférieurs (34) sont biseautés de manière complémentaire à la montée de la rampe.

4. Meuble de cuisine selon la revendication 3, **caractérisé en ce qu'**au moins un élément d'adhérence (35) est fixé sur les bords inférieurs des deux entretoises pour augmenter le frottement entre les bords inférieurs et la rampe.

5. Meuble de cuisine selon l'une des revendications précédentes, **caractérisé en ce que** le la rampe présente un angle d'inclinaison compris entre 15° et 45°, de préférence entre 25° et 35°.

6. Meuble de cuisine selon l'une des revendications précédentes, **caractérisé en ce que** l'angle d'inclinaison de la rampe est homogène sur toute l'étendue de celle-ci.

7. Meuble de cuisine selon l'une des revendications précédentes, **caractérisé en ce qu'**une évacuation d'eau (44) est disposée en aval de la rampe.

8. Meuble de cuisine selon la revendication 7, **caractérisé en ce que** l'évacuation d'eau est allongée et recueille de l'eau sur une zone étendue de la largeur de la rampe.

9. Meuble de cuisine selon l'une des revendications précédentes, **caractérisé en ce que** la longueur de la surface de travail est inférieure à la longueur horizontale de la rampe
